# EUROPÄISCHE PATENTSCHRIFT

(11) **EP 3 720 892 B1**
(45) Veröffentlichungstag und Bekanntmachung des Hinweises auf die Patenterteilung: **19.01.2022**
(21) Anmeldenummer: 18814586.6
(22) Anmeldetag: 05.12.2018
(51) Int. Cl.: C08G 18/48, C08G 18/66, C08G 18/76, C08G 18/32

(54) **VERFAHREN ZUR HERSTELLUNG VON URETHANGRUPPEN UND ISOCYANURATGRUPPEN ENTHALTENDEN OFFENZELLIGEN HARTSCHAUMSTOFFEN**
METHOD FOR PRODUCING URETHANE GROUPS AND OPEN-CELL SOLID FOAMS CONTAINING ISOCYANURATE GROUPS
PROCÉDÉ DE FABRICATION DE GROUPES D'URÉTHANE ET DE GROUPES D'ISOCYANURE CONTENANT DES MATIÈRES DE CAOUTCHOUC DUR À ALVÉOLES OUVERTES

(30) Priorität: 05.12.2017 EP 17205446
(43) Veröffentlichungstag der Anmeldung: 14.10.2020
(73) Patentinhaber: BASF SE, 67056 Ludwigshafen am Rhein (DE)
(72) Erfinder: KROGMANN, Joerg, 49448 Lemfoerde (DE); KLASSEN, Johann, 49448 Lemfoerde (DE); WAGNER, Hendrik, 49448 Lemfoerde (DE)
(74) Vertreter: BASF IP Association
(86) Internationale Anmeldenummer: PCT/EP2018/083571
(87) Internationale Veröffentlichungsnummer: WO 2019/110631

(56) Entgegenhaltungen:
- US-A1- 2005 014 857
- US-A1- 2011 175 346

## Beschreibung

Gegenstand der Erfindung ist ein Verfahren zur Herstellung eines offenzelligen Polyurethanhartschaums nach einem Blockschaumverfahren durch Umsetzung einer Reaktionsmischung umfassend
a. ein oder mehrere Polyisocyanate;
b. ein oder mehrere Verbindungen enthaltend gegenüber Isocyanatgruppen reaktiven Gruppen mit einer Funktionalität zwischen 1,9 bis 8;
c. ein oder mehrere Katalysatoren; und
d. Treibmittel;
e. in Anwesenheit eines Stabilisators e2) und eines Zellöffners e1), wobei der Stabilisator e2) bevorzugt ein Polyether-Polydimethylsiloxan-Copolymer und der Zellöffner e1) eine Mischung aus makromolekularen ungesättigten Kohlenwasserstoffen mit einem Ester ist, und das Gewichtsverhältnis von Zellöffner e1) zu Stabilisator e2) bei mindestens 0,2 liegt;
dadurch gekennzeichnet, dass
i. mehr als 1 Gew-%, bezogen auf das Gesamtgewicht der Komponente b), mindestens einer Verbindung b-1) als Kettenverlängerungs- und/oder Vernetzungsmittel verwendet wird ausgewählt aus der Gruppe der Alkanolamine, Diole und/oder Triole mit Molekulargewichten kleiner als 400 und einer Funktionalität zwischen 2 bis 3;
ii. als Treibmittel (d) nur ein chemisches Treibmittel oder eine Mischung aus chemischen Treibmitteln verwendet wird; und
iii. der Isocyanatindex im Bereich von 130 bis 215 liegt.

Polyurethan-Hartschaumstoffe sind seit langem bekannt. Ein wesentliches Einsatzgebiet ist die Temperaturisolierung. In jüngerer Zeit werden zunehmend auch Vakuumisolationspaneele zur Isolierung eingesetzt. Solche Vakuumisolationseinheiten bestehen in der Regel aus einem wärmeisolierenden Kernmaterial, beispielsweise offenzelligem Polyurethan (PUR)-Hartschaum, offenzelligem extrudierten Polystyrolschaum, Kieselgelen, Glasfasern, Kunststoffschüttungen, gepresstem Mahlgut aus PUR-Hartschaum bzw. -Halbhartschaum oder Perlite, welches in eine gasdichte Folie verpackt, evakuiert und luftdicht eingeschweißt wird.

Vakuumisolationseinheiten finden unter anderem Anwendung für Kühlgerätegehäuse, Behälter für Kühlfahrzeuge oder Fernwärmerohre. Aufgrund ihrer geringeren Wärmeleitfähigkeit bieten sie Vorteile gegenüber üblichen Dämmstoffen. So liegt das Energieeinsparpotential gegenüber geschlossenzelligen Polyurethan-Hartschaumstoffen bei etwa 20 bis 30%.

Bei einer weiteren Ausführungsform können Vakuumisolationseinheiten durch Einbringen eines Schaumsystems für offenzellige Polyurethan-Hartschaumstoffe in das Innere der Doppelwand eines doppelwandigen Gehäuses, beispielsweise eine Kühlmöbeltür oder ein Kühlmöbelgehäuse, wo das System zu einem offenzelligen Schaum aushärtet, und nachfolgende Evakuierung hergestellt werden. Bei dieser Ausführungsform kann eine Vakuumpumpe mit der mit Schaum gefüllten Doppelwand verbunden werden, durch die das Vakuum bei Bedarf erneuert werden kann.

Bei der Verwendung von Polyurethan-Hartschaumstoffen für derartige Anwendungen ist es wesentlich, dass die Zellen des Schaums offen sind, um eine vollständige Evakuierung des Vakuum-Isolationspaneels zu erreichen. Hierfür sind eine Reihe von Möglichkeiten bekannt.

DE 19917787 beschreibt ein Verfahren zur Herstellung komprimierter Polyurethanhartschaumstoffe und WO 0047647 offenbart ein Verfahren zur Herstellung feinzelliger Polyurethanhartschaumstoffe. EP 0581191 bezieht sich auf ein Verfahren zur Herstellung offenzelliger Polyurethanschaumstoffe; US 5889067 beschreibt ebenfalls eine Methode zur Erzeugung eines offenzelligen Polyurethanhartschaumstoffs. US 2002045690 offenbart ein Pultrusionsverfahren unter Einsatz von Polyisocyanuraten.

EP 905 159 sowie EP 905 158 offenbaren Verfahren zur Herstellung von offenzelligen Hartschaumstoffen, wobei bevorzugt ein Veresterungsprodukt aus Fettsäuren und mehrfunktionellen Alkoholen als Emulgierhilfsmittel zur Unterstützung der lagerstabilen treibmittelhaltigen Emulsion eingesetzt wird. Dabei werden insbesondere Kombinationen von Perfluoralkanen und Alkanen als physikalische Treibmittel eingesetzt. Der Einsatz von Perfluoralkanen zur Erzeugung feiner Zellen ist bereits aus EP 351 614 bekannt. In DE 100 09 649 wird ein Verfahren zur Herstellung von offenzelligen Hartschaumstoffen beschrieben, bei dem auf physikalische Treibmittel verzichtet werden kann. Bei der Herstellung dieser Schäume kommt eine Polyolkomponente zum Einsatz, die neben einem Veresterungsprodukt aus Glycerin und Rizinusöl weitere zur Herstellung von Polyurethan-Hartschaumstoffen übliche Polyetheralkohole mit einer Hydroxylzahl im Bereich von 175 bis 300 mgKOH/g enthält.Die dort beschriebenen Schäume zeigen eine gute Offenzelligkeit und ausreichende mechanische Eigenschaften.

Eine Möglichkeit, die als Kernmaterial für die Vakuumisolationspaneele eingesetzten offenzelligen Polyurethan-Hartschaumstoffe herzustellen, ist das sogenannte Blockschaumverfahren. Ein solches Verfahren ist beispielsweise beschrieben in WO 99/61503. Dabei werden große Schaumblöcke, die zumeist eine Größe von 0,5x1,2x2 Metern aufweisen, hergestellt und mechanisch, zumeist durch Sägen, auf die gewünschte Größe gebracht. Diese Verfahrensweise ist sehr effektiv. Nachteilig ist jedoch, dass es auf Grund der Exothermie der Urethan-Reaktion im Innern der Blöcke häufig zu einer erhöhten Temperatur kommt, was zu einer erhöhten Rissbildung im Schaum und im Extremfall zu einer thermischen Zersetzung bis hin zu einer Verbrennung im Inneren des Blocks führen kann.

In WO 99/61503 erfolgt die Herstellung der Hartschaumstoffe in Anwesenheit einer cyclischen, mit Isocyanaten reaktiven Harnstoffverbindung. Nach diesem Verfahren konnten jedoch nur Hartschaumblöcke mit geringer Höhe, bis maximal 50 cm, hergestellt werden. Da bei der Blockverschäumung an den Rändern der Blöcke stets eine Haut mit geschlossenen Zellen entsteht, die abgetrennt werden muss, ist der Verschnitt umso größer, je kleiner der Block ist. Damit sind höhere Blöcke effizienter. Außerdem müssen größere Vakuumisolationspaneele nicht aus mehreren PUR-Platten zusammengesetzt werden, was ebenfalls einen wirtschaftlichen Vorteil darstellt.

Als Folge dieser Problematik beschreibt die EP 2 072 548 A ein Verfahren zur Herstellung offenzelliger Polyurethanhartschäume unter Anwendung des Blockschaumverfahrens auch bei niedrigen Schäumtemperaturen, wobei als Treibmittel eine Mischung aus Wasser und mindestens einem physikalischen Treibmittel eingesetzt wird, wodurch Materialien mit guten mechanischen Eigenschaften erhalten werden. Die hierbei erhaltenden Polyurethanhartschäume weisen gute Härtungseigenschaften auf, eine Rissbildung bei den Schäumen wurde vermieden und die Schäume wiesen nicht nur mechanische, sondern auch vorteilhafte und Wärmeisolationseigenschaften auf.

Aus ölologischen und ökonomischen Gründen ist der Einsatz von physikalischen Treibmitten, die, wie in der EP 2 072 548 A definiert, jedoch nachteilig und stellen keine nachhaltige Lösung dar. Allerdings führt grade der Einsatz des physikalischen Treibmittels nicht nur zu der für die Anwendung in Vakuumisolationspanelen notwendigen vorteilhaften Schaumbildung, sondern ermöglicht die Durchführung des Verfahrens bei niedrigen Temperaturen, da bei Verwendung von Wasser als alleinigem Treibmittel die Exothermie der Reaktion signifikant ansteigt, was im Extremfall sogar zu thermischen Zersetzungsprozessen im Schaum führen kann .

Es war daher Aufgabe der vorliegenden Erfindung, ein Verfahren zur Herstellung von offenzelligem Polyurethanhartschäumen zu entwickeln unter Nutzung des Blockschaumverfahrens bei möglichst niedrigen Schäumtemperaturen, wobei lediglich chemische Treibmittel, vorzugsweise Wasser als Treibmittel eingesetzt wird. Die durch dieses Verfahren erhaltenden offenzelligen Polyurethanhartschäume sollten mindestens gleiche, bevorzugt allerdings bessere mechanische Eigenschaften bei einer deutlich nachhaltigeren und einfachen Prozessführung ohne Zusatz von physikalischen Treibmitteln zeigen. Dabei sollen durch die Exothermie der Urethan-Reaktion verursachte Beeinträchtigungen im Inneren der PUR-Hartschaumblöcke wie Rißbildung und thermische Zersetzung im Inneren des Blockschaums vermieden werden. Für den Einsatz in Vakuumisolationspanelen müssen die PUR-Hartschäume weiterhin einen möglichst hohen Grad an Offenzelligkeit sowie eine gute Evakuierbarkeit aufweisen, so dass die PUR-Hartschäume innerhalb vernünftiger Zeiträume und möglichst vollständig evakuiert werden können.

Die Aufgabe konnte überraschenderweise gelöst werden durch ein Verfahren zur Herstellung eines offenzelligen Polyurethanhartschaums nach einem Blockschaumverfahren durch Umsetzung einer Reaktionsmischung umfassend
a. ein oder mehrere Polyisocyanate;
b. ein oder mehrere Verbindungen enthaltend gegenüber Isocyanatgruppen reaktiven Gruppen mit einer Funktionalität zwischen 1,9 bis 8;
c. ein oder mehrere Katalysatoren; und
d. Treibmittel;
e. in Anwesenheit eines Stabilisators e2) und eines Zellöffners e1), wobei der Stabilisator e2) bevorzugt ein Polyether-Polydimethylsiloxan-Copolymer und der Zellöffner e1) eine Mischung aus makromolekularen ungesättigten Kohlenwasserstoffen mit einem Ester ist, und das Gewichtsverhältnis von Zellöffner e1) zu Stabilisator e2) bei mindestens 0,2 liegt;
dadurch gekennzeichnet, dass
i. mehr als 1 Gew-%, bezogen auf das Gesamtgewicht der Komponente b), mindestens einer Verbindung b-1) als Kettenverlängerungs- und/oder Vernetzungsmittel verwendet wird ausgewählt aus der Gruppe der Alkanolamine, Diole und/oder Triole mit Molekulargewichten kleiner als 400g/mol und einer Funktionalität zwischen 2 bis 3;
ii. als Treibmittel (d) nur ein chemisches Treibmittel oder eine Mischung aus chemischen Treibmitteln verwendet wird; und
iii. der Isocyanatindex im Bereich von 130 bis 215 liegt.

Die Kompontene b-1) wird ausgewählt aus der Gruppe der Alkanolamine, Diole und/oder Triole mit Molekulargewichten kleiner als 400 g/mol und einer Funktionalität zwischen 2 bis 3

Beispiele für geeignete Alkanolamine sind Mono, Di- oder Tri-C₁-C₄-alkanolamine oder Methyl-C₁-C₄-alkanolamine, zum Beispiel Ethanolamin, Diethanolamin, Triethanolamin, Propanolamin, N,N-Diethanol-propanamin, Butanolamin, N,N-Diethanol-butanamin, N-Methyl-Ethanolamin, N-Ethyl-Diethanolamin, N-Methyl-Diethanolamin, N-Methyl-propanamin, N-Methyl-N-Ethanolpropanamin, N-Methyl-butanamin, N-Methyl-N-Ethanol-butanamin oder Mischungen aus den vorstehend genannten Alkanolaminen.

Beispiele für geeignete Triole sind Glycerin (Molekulargewicht 92,1 g/mol) und Trimethylolpropan (Molekulargewicht 134,2 g/mol).

Beispiele für geeignete Diole sind Monoethylenglycol, 1,2- und 1,3-Propandiol, 1,2-, 1,3-, 1,4- und 2,3-Butandiol, Pentandiole, Hexandiole, Diethylenglykol, Triethylenglykol, Dipropylenglykol und Tripropylenglycol.

Bevorzugt sind Diole oder Alkanolamine mit Molekulargewichten kleiner als 400 g/mol, vorzugsweise einem Molekulargewicht von 60 bis 300 g/mol.

Ganz besonders bevorzugt sind Diole mit Molekulargewichten kleiner als 400g/mol, vorzugsweise einem Molekulargewicht von 60 bis 300g/mol.

Bezogen auf das Gesamtgewicht der Komponente b) beträgt der Anteil der Komponente b-1) mindestens 1 Gew-%, bevorzugt mehr als 1 Gew.-%, mehr bevorzugt mindestens 1,1 Gew.-%, noch mehr bevorzugt mindestens 1,5 Gew.-% und besonders bevorzugt mindestens 2,0 Gew.-%. Bevorzugte Bereiche sind 1 bis 5-Gew%, besonders bevorzugt 1,5 Gew-% bis 4 Gew%, ganz besonders bevorzugt mindestens 2,0 Gew-% bis 3,5 Gew%.

Wie oben ausgeführt, sind die nach dem erfindungsgemäßen Verfahren hergestellten Hartschaumstoffe offenzellig. Unter dem Begriff offenzellig wird im Rahmen der vorliegenden Erfindung verstanden, dass mindestens 80, vorzugsweise mindestens 90 und besonders bevorzugt mindestens 95 % der Zellen des Schaumstoffs offen sind. Die Bestimmung der Offenzelligkeit erfolgt nach DIN ISO 4590.

In einer bevorzugten Ausführungsform des erfindungemäßen Verfahrens enthalten die nach dem erfindungsgemäßen Verfahren herstellbaren Hartschaumstoffe neben Urethangruppen auch Isocyanuratgruppen. Derartige Schaumstoffe werden häufig auch als Polyisocyanuratschäume (PIR-Schäume) bezeichnet.

Als Polyisocyanate (a) können alle aus dem Stand der Technik bekannten aliphatischen, cycloaliphatischen und aromatischen zwei- oder mehrwertigen Isocyanate sowie beliebige Mischungen daraus eingesetzt werden. Vorzugsweise werden aromatische zwei- oder mehrwertigen Isocyanate eingesetzt. Beispiele sind 4,4', 2,4' und 2,2'-Diphenylmethandiisocyanat (MDI), die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Isophorondiisocyanat (IPDI), 1,5-Naphthalindiisocyanat (NDI), 2,4,6-Toluoltriisocyanat und 2,4- und 2,6-Toluoldiisocyanat (TDI), oder Mischungen daraus.

Besonders bevorzugt werden aromatische Isocyanate, ausgewählt aus der Gruppe, bestehend aus 2,4-Toluoldiisocyanat, 2,6-Toluoldiisocyanat, 2,4'-Diphenylmethandiisocyanat und 4,4'-Diphenylmethandiisocyanat und höherkernige Homologe des Diphenylmethandiisocyanats (Polymer-MDI) sowie Gemische dieser Isocyanate eingesetzt. Insbesondere wird als Isocyanat ein aromatisches Isocyanat, ausgewählt aus der Gruppe, bestehend aus 2,4'-Diphenylmethandiisocyanat, 4,4'-Diphenylmethandiisocyanat, höherkernigen Homologen des Diphenylmethandiisocyanats oder Mischungen aus zwei oder mehreren dieser Verbindungen eingesetzt.

Neben den Polyalkoholen b-1) sind in der Komponente b) üblicherweise noch weitere Verbindungen mit mindestens zwei mit Isocyanatgruppen reaktiven Wasserstoffatomen wie Polyole enthalten. Als Verbindungen mit mindestens zwei mit Isocyanatgruppen reaktiven Wasserstoffatomen werden zumeist Polyetheralkohole und/oder Polyesteralkohole, im folgenden als Polyole b-2) bezeichnet, eingesetzt, insbesondere Polyetheralkohole. Bevorzugt enthält die Reaktionsmischung mindestens ein weiteres Polyol b-2), besonders bevorzugt besteht die Komponente b) aus Komponenten b-1) und b-2).

Als Verbindungen mit mindestens zwei gegenüber Isocyanatgruppen reaktiven Wasserstoffatomen kommen solche in Betracht, die mindestens zwei reaktive Gruppen, beispielsweise OH- und NH-Gruppen, bevorzugt OH-Gruppen, enthalten, insbesondere Polyetheralkohole und/oder Polyesteralkohole mit OH-Zahlen im Bereich von 25 bis 800 mg KOH/g.

Die eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die eingesetzten Polyesteralkohole haben üblicherweise eine Funktionalität im Bereich von 1,5 bis 4.

Insbesondere kommen Polyetheralkohole, die nach bekannten Verfahren, beispielsweise durch anionische Polymerisation von Alkylenoxiden an H-funktionellen Startsubstanzen in Gegenwart von Katalysatoren, vorzugsweise Alkalihydroxiden oder Doppelmetallcyanidkatalysatoren (DMC-Katalysatoren), hergestellt werden, zum Einsatz.

Als Alkylenoxide werden zumeist Ethylenoxid oder Propylenoxid, aber auch Tetrahydrofuran, verschiedene Butylenoxide, Styroloxid, vorzugsweise reines 1,2-Propylenoxid, eingesetzt. Die Alkylenoxide können einzeln, alternierend nacheinander oder als Mischungen verwendet werden.

Als Startsubstanzen kommen insbesondere Verbindungen mit mindestens 2, vorzugsweise 2 bis 8 Hydroxylgruppen oder mit mindestens einer primären Aminogruppe im Molekül zum Einsatz. Als Startsubstanzen mit mindestens 2, vorzugsweise 2 bis 8 Hydroxylgruppen im Molekül werden vorzugsweise Trimethylolpropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startsubstanzen mit mindestens einer primären Aminogruppe im Molekül werden vorzugsweise aromatische Di- und/oder Polyamine, beispielsweise Phenylendiamine, und 4,4'-, 2,4'- und 2,2'-Diamino-diphenylmethan sowie aliphatische Di- und Polyamine, wie Ethylendiamin, eingesetzt. Geeignet sind auch Ethanolamin oder auch Toluoldiamine.

Die Polyetheralkohole besitzen eine Funktionalität von vorzugsweise 2 bis 8 und Hydroxylzahlen von vorzugsweise 25 mg KOH/g bis 800 mg KOH/g und insbesondere 150 mg KOH/g bis 570 mg KOH/g.

Wie beschrieben, werden die Kettenverlängerungs- und/oder Vernetzungsmittel b-1) und Polyole b-2) in einem solchen Verhältnis gemischt, dass die geforderten Werte für Funktionalität und Hydroxylzahl erreicht werden.

Die Herstellung der Hartschaumstoffe wird üblicherweise in Anwesenheit von Katalysatoren (c), Treibmitteln (d) und Zellstabilisatoren (e) sowie, falls erforderlich weiteren Hilfs- und/oder Zusatzstoffen wie beispielsweise Flammschutzmitteln durchgeführt.

Als Katalysatoren (c) werden insbesondere Verbindungen eingesetzt, welche die Reaktion der Isocyanatgruppen mit den mit Isocyanatgruppen reaktiven Gruppen stark beschleunigen. Solche Katalysatoren sind beispielsweise basische Amine, wie sekundäre aliphatische Amine, Imidazole, Amidine, Alkanolamine, Lewissäuren oder metallorganische Verbindungen, insbesondere solche auf Basis von Zinn oder Bismut. Auch Katalysatorsysteme, bestehend aus einer Mischung verschiedener Katalysatoren, können eingesetzt werden.

Als Isocyanurat-Katalysatoren werden üblicherweise Metallcarboxylate, insbesondere Kaliumformiat, Kaliumoctanoate oder Kaliumacetat und deren Lösungen, eingesetzt. Die Katalysatoren können, je nach Erfordernis, allein oder in beliebigen Mischungen untereinander eingesetzt werden.

Als Treibmittel (d) werden in der vorliegenden Erfindung allein chemisch wirkende Treibmittel eingesetzt. Unter chemischen Treibmitteln versteht man Verbindungen, die durch Reaktion mit Isocyanat gasförmige Produkte bilden. Dabei kann ein chemisches Treibmittel oder eine Mischung aus chemischen Treibmitteln eingesetzt werden. Bevorzugte chemische Treibmittel sind Wasser oder Säuren, insbesondere Ameisensäure oder Mischungen aus Wasser und Säuren. Besonders bevorzugt ist das chemische Treibmittel (d) ausgewählt aus Wasser und Mischungen aus Wasser mit einem oder mehr weiteren chemischen Treibmitteln, ganz besonders bevorzugt ist das chemische Treibmittel Wasser.

In einer bevorzugten Ausführungsform der vorliegenden Erfindung beträgt die Menge des Treibmittels mindestens 1 Gew-% bezogen auf das Gesamtgewicht der eingesetzten Komponenten b), c), d) und e), wobei besonders bevorzugt der Bereich von 1 bis 6 Gew-%, ganz besonders bevorzugt 1,5 bis 6 Gew-% gewählt wird.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Antioxidantien, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7,"Polyurethane" Carl-Hanser-Verlag München, 1 . Auflage, 1966, 2. Auflage, 1983 und 3. Auflage, 1993.

Wie oben ausgeführt, ist die Offenzelligkeit ein wesentliches Merkmal der nach dem erfindungsgemäßen Verfahren hergestellten Hartschaumstoffe. Dies ist erforderlich, um die Evakuierung bei der Herstellung der Vakuumisolationspaneele zu ermöglichen. Weiterhin verhindert die Offenzelligkeit eine zu starke thermische Belastung der Schaumstoffe während der Herstellung. Zur Erhöhung der Anzahl der offenen Zellen werden Zellöffner e1) eingesetzt. Dabei handelt es sich vorzugsweise um Verbindungen, die die Oberflächenspannung der Komponenten bei der Verschäumung beeinflussen. Bevorzugst werden als Zellöffner e1) Ester, besonders bevorzugt Ester von Carbonsäuren, in Kombination mit makromolekularen, ungesättigen Kohlenwasserstoffen eingesetzt, wobei als Zellöffner e1) eine Mischung aus makromolekularen ungesättigten Kohlenwasserstoffen mit einem Phthalsäurester vorteilhaft eingesetzt werden kann. Diese Mischung ist häufig mit Aminen stabilisiert. Es kann ein Zellöffner e1) oder eine Mischung von Zellöffnern e1) eingesetzt werden.

Auch die Stabilisatoren e2) haben einen großen Einfluss auf die Offenzelligkeit der durch Polyether-Polydimethylsiloxan-Copolymeren Schäume mit einem hohen Anteil mit offenen Zellen erhalten werden können. Beispiele für geeignete Stabilisatoren sind Tegostab B 8870 von Evonik, der Zellöffnung begünstigt. Es kann ein Stabilisator e2) oder eine Mischung von Stabilisatoren e2) eingesetzt werden.

Besonders vorteilhaft ist es, eine Mischung aus makromolekularen, ungesättigten Kohlenwasserstoffen mit einem Phthalsäurester als Zellöffner e1) und Polyether-Polydimethylsiloxan-Copolymeren als Stabilisator e2) zu verwenden. Diese kann vorzugsweise in einer Menge von 0,5 bis 5,0 Gew.-%, bezogen auf das Gewicht der Komponente b) eingesetzt werden. Das Gewichtsverhältnis von e1) zu e2) liegt erfindungsgemäß bei mindestens 0,2, bevorzugt im Bereich von 0,2 bis 10, mehr bevorzugt im Bereich von 0,2 bis 7 und besonders bevorzugt im Bereich von 0,2 bis 5. Es ist auch möglich, dass das Gewichtsverhältnis von e1) zu e2) im Bereich von 0,2 bis 3 liegt.

In der Technik werden die Komponenten b), c), d) und e) häufig zu einer sogenannten Polyolkomponente vermischt und in dieser Form mit den Polyisocyanaten a) umgesetzt.

Wie oben ausgeführt, wird bei der Herstellung der Schaumstoffe nach dem erfindungsgemäßen Verfahren das Polyisocyanat und die Verbindungen mit mindestens zwei mit Isocyanatgruppen reaktiven Wasserstoffatomen bei einem Isocyanatindex im Bereich von 130 bis 215 umgesetzt. In einer bevorzugten Ausführungsform werden das Polyisocyanat und die Verbindungen mit mindestens zwei mit Isocyanatgruppen reaktiven Wasserstoffatomen bei einem Isocyanatindex im Bereich von 150 bis 215, besonders bevorzugt von 180 bis 210 umgesetzt.

Die Herstellung der Schaumstoffe erfolgt, wie beschrieben, vorzugsweise im Blockschäumverfahren. Das Blockschäumverfahren ist im allgemeinen ein diskontinuierlicher Prozess, bei dem große Blöcke, beispielsweise 2 m × 1,2 m ×1,2 m, durch relativ langsam reagierende Schaumsysteme hergestellt werden. Dazu werden die Polyolkomponente und das Polyisocyanat a) vermischt und diese Mischung in eine Form eingebracht, wo sie zum Schaum aushärtet. Die Größe der Form hängt von der beabsichtigten Größe des Schaumblocks ab. Nach der Aushärtung des Schaums wird der Block aus der Form entnommen. Danach kann er in die für die Herstellung der Vakuumisolationspaneele erforderlichen Stücke zerkleinert werden, vorzugsweise durch Sägen. Dazu werden/können handelsübliche Band- und Drahtsägen eingesetzt werden. Bei der Verschäumung wird vorzugsweise vor dem Schäumen die Form mit einer Folie ausgekleidet, um eine Benetzung und damit Anhaftung des Schaums an der Formenwandung zu verhindern. Beim Blockschäumverfahren wird die Reaktionsmischung frei geschäumt, d.h. der sich bildende Schaum wird nicht in allen Dimensionen beschränkt, sondern kann sich in mindestens eine Dimension frei ausdehnen.

Eine Standformentechnik besteht aus mehreren Formen und einer/mehrerer Mischstationen, zumeist Rührwerke, Mischanlagen wie Niederdruckmischköpfe, kann ebenso eingesetzt werden wie eine Karusselltechnik (Formen auf Karussellteller), bei der in der Regel zentral an einer Position mit einer Mischstation/Anlage gemischt wird.

Die erhaltenen erfindungsgemäßen offenzelligen Polyurethanhartschaumstoffe weisen eine Dichte von 30 bis 100 g/l, vorzugsweise von 40 bis 80 g/l auf. Die Bestimmung der Dichte erfolgt durch Gewichtsbestimmung eines aus einem Schaumstoffblock ausgeschnittenen Würfels mit einer Kantenlänge von mindestens 10 cm.

Die Herstellung der Vakuumisolationspaneele erfolgt, wie oben beschrieben, indem der offenzelligen Polyurethanhartschaumstoff von einer gasundurchlässigen Folie umhüllt, diese zugeschweißt und evakuiert wird.

Durch das erfindungsgemäße Verfahren ist es möglich, auf einfache Weise offenzellige Polyurethanhartschaumstoffe herzustellen, die eine hohe Offenzelligkeit und gute mechanische Eigenschaften aufweisen und zu Vakuumisolationspaneelen verarbeitet werden können. Überraschenderweise kommt es zu keiner Überhitzung und thermischen Schädigung der Schaumstoffe, was normalerweise durch den Einsatz von Wasser als Treibmittel zu erwarten wäre.

Weiterer Gegenstand der vorliegenden Erfindung ist ein offenzelliger Polyurethanhartschaum erhältlich durch das erfindungsgemäße Verfahren, sowie die Verwendung eines offenzelligen Polyurethanhartschaums hergestellt nach dem erfindungsgemäßen Verfahren als Kernmaterial von Vakuumisolationspanelen.

Die Erfindung soll an den nachfolgenden Beispielen näher erläutert werden.

### Beispiele

Messmethoden:
Messung der Hydroxylzahl:
   Die Hydroxylzahlen werden nach der DIN 53240 (1971-12) bestimmt.
Viskositätsbestimmung:
   Die Viskosität der Polyole wird, wenn nicht anders angegeben, bei 25 °C gemäß DIN EN ISO 3219 (1994) mit einem Haake Viscotester 550 mit Platte/Kegel-Messgeometrie (PK100) unter Verwendung des Kegels PK 1 1 ° (Durchmesser: 28 mm; Kegelwinkel: 1°) bei einer Scherrate von 40 1/s bestimmt.
Druckfestigkeit:
   Die Druckfestigkeit wird bestimmt nach DIN ISO 844 EN DE (2014-11).
Offenzelligkeit (OZ)
   Die Offenzelligkeitsbestimmung mit entsprechender Meßzeit wurde gemäß DIN EN ISO 4590 erhalten.
Raumgewicht
   Das Raumgewicht wurde durch Messung des Raumgewichts im Kern gemäß DIN EN ISO 845 bestimmt.

### Ausgangsstoffe

a) Isocyanat (Polymer-MDI)
   Isocyanat 1 Lupranat^{®} M20 NCO-Gehalt = 31,8 g/100g von BASF
b) Polyole
   Polyol 1 (b-2): OH-Zahl=490; hergestellt durch Anlagerung von Propylenoxid an Saccharose, und Glycerin
   Polyol 2 (b-2): OH-Zahl=105; hergestellt durch Anlagerung von Propylenoxid an Propylenglykol
   Polyol 3 (b-2): OH-Zahl=250; hergestellt durch Anlagerung von Propylenoxid an Propylenglykol
   Polyol 4 (b-1): Monoethylenglycol (MEG) als Kettenverlängerer
   Polyol 5 (b-1): Glycerin als Kettenverlängerer
   Polyol 6 (b-2): OH-Zahl=490; hergestellt durch Anlagerung von Propylenoxid an Sorbitol
   Polyol 7 (b-2): OH-Zahl=42, hergestellt durch Anlagerung von Propylenoxid und Ethylenoxid an Glycerin
c) Katalysatoren
   Katalysator 1 (c-1): Polycat^{®} 58 (Evonik)
   Katalysator 2 (c-2): Kaliumacetat in MEG, 47 Gew.-% (BASF)
   Katalysator 3 (c-3): Dimehtylcyclohexylamin (DMCHA)
d) Treibmittel:
   Wasser (d-1)
   Cyclopentan 70: Cyclopentan/Isopentan (70:30%) (physikalisches Treibmittel)
f) Zusatzmittel:
   Stabilisator (e2): Tegostab^{®} B8870 von Fa. Evonik (Stabilisator)
   Zellöffner (e1): Ortegol^{®} 501 von (Evonik)

Die Komponenten a) bis e) wurden zu einer Polyolkomponente vermischt und mit dem Isocyanat umgesetzt. Die Mengen der verwendeten Einsatzstoffe finden sich in Tabelle 1. V bezeichnet Vergleichsbeispiele, DB erfindungsgemäße Beispiele. Die Vermischung erfolgte in einem Mischkopf (zum Beispiel Niederdruck oder Hochdruckverfahren, die Verarbeitung von DB 7 erfolgte im Hochdruckverfahren) oder durch Verrühren einem Vorlagebehälter. Die Reaktionsmischung wurde in eine Laborform mit den Seitenlängen 418 mm × 700 mm × 455 mm ausgetragen und dort aushärten gelassen.

**Tabelle 1**

| | | V1 | V2 | DB1 | DB2 | DB3 | V3 | V4 | DB4 | DB5 | V5 | DB6 | DB7 | DB8 | DB9 | V6 | V7 |
|---|---|---|---|---|---|---|---|---|---|---|---|---|---|---|---|---|---|
| Polyol 1 (b-2) | [Gew.-%] | 40,1 | 42,7 | 41,3 | 41,3 | 41,2 | 41,3 | 41,9 | 41,5 | 41,3 | 43,7 | 42,2 | 43,5 | 39,7 | 41,8 | - | - |
| Polyol 2 (b-2) | [Gew.-%] | 40,1 | 42,7 | 41,3 | 41,3 | 41,2 | 41,3 | 41,9 | 41,5 | 41,3 | 41,3 | 41,3 | 41,3 | 41,3 | 41,3 | 20,0 | 20,0 |
| Polyol 3 (b-2) | [Gew.-%] | 8,3 | 8,9 | 8,6 | 8,6 | 8,6 | 8,6 | 8,7 | 8,6 | 8,6 | 8,6 | 8,6 | 8,6 | 8,6 | 8,6 | - | - |
| Polyol 4 (*) (b-1) | [Gew.-%] | - | - | 2,7 | 2,7 | 2,7 | 2,7 | 0,95 | 1,9 | - | 2,7 | 2,7 | 2,7 | 2,7 | 2,7 | - | - |
| Polyol 5 (b-1) | [Gew.-%] | - | - | - | - | - | - | - | - | 2,7 | - | - | - | - | - | - | - |
| Polyol 6 (b-2) | [Gew.-%] | - | - | - | - | - | - | - | - | - | - | - | - | - | - | 48,8 | 47,9 |
| Polyol 7 (b-2) | [Gew.-%] | - | - | - | - | - | - | - | - | - | - | - | - | - | - | 25,0 | 25,0 |
| Katalysator 1 (c-1) | [Gew.-%] | 0,45 | 0,5 | 0,29 | 0,29 | 0,39 | 0,29 | 0,47 | 0,47 | 0,29 | 0,29 | 0,29 | 0,29 | 0,29 | 0,29 | - | - |
| Katalysator 2 (ⁱ) (c-2) | [Gew.-%] | 0,64 | 0,7 | 0,93 | 0,93 | 0,93 | 0,93 | 0,95 | 0,94 | 0,93 | 0,93 | 0,93 | 0,93 | 0,93 | 0,93 | 0,08 | 0,08 |
| Katalysator 3 (c-3) | [Gew.-%] | - | - | - | - | - | - | - | - | - | - | - | - | - | - | 0,5 | 0,5 |
| Cyclopentan 70 | [Gew.-%] | 6,8 | - | - | - | - | - | - | - | - | - | - | - | - | - | - | - |
| Wasser (d-1) | [Gew.-%] | 0,5 | 1,26 | 1,66 | 1,66 | 1,85 | 1,66 | 1,95 | 1,93 | 1,66 | 1,95 | 1,66 | 1,66 | 1,66 | 1,2 | 1,66 | 1,66 |
| Zellregulatoren (e) | | | | | | | | | | | | | | | | | |
| Stabilisator (e2) | [Gew.-%] | 0,82 | 0,87 | 0,83 | 0,83 | 0,83 | 0,83 | 0,85 | 0,85 | 0,83 | 0,83 | 0,83 | 0,83 | 0,83 | 0,83 | - | 0,9 |
| Zellöffner (e1) | [Gew.-%] | 2,27 | 2,42 | 2,34 | 2,34 | 2,34 | 2,34 | 2,37 | 2,35 | 2,34 | - | 1,5 | 0,13 | 4 | 2,34 | 4 | 4 |

| Reaktionsparameter: | | | | | | | | | | | | | | | | | |
|---|---|---|---|---|---|---|---|---|---|---|---|---|---|---|---|---|---|
| Index | | 244 | 225 | 202 | 200 | 210 | 240 | 200 | 200 | 200 | 200 | 200 | 200 | 200 | 200 | 160 | 160 |
| Summe b+c+d+e) | [Gew.-%] | 100 | 100 | 100 | 100 | 100 | 100 | 100 | 100 | 100 | 100 | 100 | 100 | 100 | 100 | 100 | 100 |
| (*) Komponente b-1) | [Gew.-%] | 0,34 | 0,37 | 3,22 | 3,22 | 3,22 | 3,22 | 1,45 | 2,38 | 0,49 | 3,22 | 3,22 | 3,22 | 3,22 | 3,22 | 0,04 | 0,04 |
| Verh. e1 : e2 | | 2,8 | 2,8 | 2,8 | 2,8 | 2,8 | 2,8 | 2,8 | 2,8 | 2,8 | - | 1,8 | 0,2 | 4,8 | 2,8 | - | 4,4 |
| Isocyanat 1 | [Gew.-%] | 100 | 100 | 100 | 100 | 100 | 100 | 100 | 100 | 100 | 100 | 100 | 100 | 100 | 100 | 100 | 100 |
| Startzeit | [s] | 55 | 55 | 55 | 35 | 55 | 70 | 45 | 47 | 70 | 70 | 70 | 70 | 65 | 55 | ii) | 40 |
| Abbindezeit | [s] | 225 | 240 | 162 | 100 | 190 | 200 | 185 | 175 | 202 | 168 | 172 | 170 | 169 | 148 | | 190 |
| Kerndichte | [kg/m³] | 67,5 | 87,2 | 65,9 | 55 | 64,6 | 76,3 | 60,8 | 60,3 | 71,4 | 61,2 | 62,7 | 60,9 | 67,6 | 78,5 | | 66,6 |

| Versuchsergebnisse: | | | | | | | | | | | | | | | | | |
|---|---|---|---|---|---|---|---|---|---|---|---|---|---|---|---|---|---|
| Tmax | [°C] | 147 | 164 | 180 | 190,1 | 169,6 | 172,3 | 165,6 | 168,7 | 175,2 | 179 | 179 | 179 | 178,5 | 180 | | 145 |
| OZ (korr) | [%] | 93 | 19 | 95 | 100 | 93 | 99 | 78 | 91 | 100 | 43 | 100 | 100 | 100 | 100 | | 15 |
| Messzeit für OZ | [s] | 1100 | 926 | 674 | 344 | 550 | 589 | 1708 | 821 | 469 | 1843 | 470 | 986 | 493 | 492 | | 1117 |
| Vermischung | | iii) | iii) | iii) | iv) | iii) | iii) | iii) | iii) | iii) | iii) | iii) | iii) | iii) | iii) | iii) | iii) |
| Kernverfärbung | | nein | nein | nein | nein | nein | ja | nein | nein | nein | nein | nein | nein | nein | nein | | nein |

i) der tatsächliche MEG-Gehalt erhöht sich durch die Menge im Katalysator 2
ii) es tritt ein Schaumkollaps auf, so dass kein PUR-Schaum erhalten wurde
iii) Vermischen in einem Vorlagebehälter
iv) Hochdruckvermischung

Zur Bestimmung des Härtungsverlaufs wurden kleine Schaumblöcke in einer Laborform mit einem Volumen von ca 0,5 dm³ geschäumt. Der Maschinenversuch erfolgte durch Schäumen in eine Holzform von ca. 1500L. Die erfindungsgemäßen Beispiele zeigen, dass offenzellige PUR/PIR-Schäume auf Basis chemischer Treibemittel hergestellt werden können (Durchführungsbeispiele DB 1 und 2). Eine hinreichende Offenzelligkeit ist für Vakuum- und VIP-Anwendungen notwendig. Diese kann insbesondere duch den Einsatz von Kettenverlängererpolyolen des Typs b-1) erzielt werden. Der Einsatz zu geringer Mengen (V4) führt zu verminderter Offenzelligkeit.

Die Vorraussetzung für die Herstellung von Blockschäumen ist, dass keine Kernverfärbungen vorliegen, da diese zu einer Verschlechterung der Eigenschaften und vor allem zu einer erhöhten Brandgefahr führen. Dabei ist besonders die maximale Kerntemperatur in Kombination mit der resultierenden Dichte ausschlaggebend.

Es müssen sowohl Zellöffner (e1) also auch Stabilisatoren (e2) vorhanden sein, da ansonsten entweder kein offenzelliger PUR-Hartschaum oder aber überhaupt kein PUR-Hartschaum erhalten wird, siehe V5 und V6. Dabei ist auch das Verhältnis von Zellöffner (e1) zu Stabilisator (e2) zu beachten, da dies für die Offenzelligkeit und Zugänglichkeit der offenen Zellen von Bedeutung ist. Die Zugänglichkeit der offenen Zellen lässt sich an der Messzeit für den Grad der Offenzelligkeit ablesen. Das Verhältnis von Zellöffner (e1) zu Stabilisatoren (e2) muss dabei ein Mindestmass überschreiten, siehe DB 8, DB 6 und DB7, da ansonsten zu viel Zeit für die Evakuierung des PUR-Hartschaums benötigt wird.

## Patentansprüche

1. Verfahren zur Herstellung eines offenzelligen Polyurethanhartschaum nach einem Blockschaumverfahren durch Umsetzung einer Reaktionsmischung umfassend
a. ein oder mehrere Polyisocyanate;
b. eine oder mehrere Verbindungen enthaltend gegenüber Isocyanatgruppen reaktiven Gruppen mit einer Funktionalität zwischen 1,9 bis 8;
c. ein oder mehrere Katalysatoren; und
d. Treibmittel;
e. in Anwesenheit eines Stabilisators e2) und eines Zellöffners e1), wobei der Stabilisator e2) bevorzugt ein Polyether-Polydimethylsiloxan-Copolymer und der Zellöffner e1) eine Mischung aus makromolekularen ungesättigten Kohlenwasserstoffen mit einem Ester ist, und das Gewichtsverhältnis von Zellöffner e1) zu Stabilisator e2) bei mindestens 0,2 liegt;
**dadurch gekennzeichnet, dass**
i. mehr als 1 Gew.-%, bezogen auf das Gesamtgewicht der Komponente b), mindestens einer Verbindung b-1) als Kettenverlängerungs- und/oder Vernetzungsmittel verwendet wird ausgewählt aus der Gruppe der Alkanolamine, Diole und/oder Triole mit Molekulargewichten kleiner als 400g/mol und einer Funktionalität zwischen 2 bis 3 und
ii. das alleinige Treibmittel ein chemisches Treibmittel oder eine Mischung aus chemischen Treibmitteln ist, und
iii. der Isocyanatindex im Bereich von 130 bis 215 liegt,

2. Verfahren nach Anspruch 1, **dadurch gekennzeichnet, dass** in der Komponente b-1) ein Diol oder Triol verwendet wird.

3. Verfahren nach Anspruch 1, **dadurch gekennzeichnet, dass** in der Komponente b-1) ein Diol verwendet wird.

4. Verfahren nach einem der Ansprüche 1 bis 3, **dadurch gekennzeichnet, dass** das Molekulargewicht der Kompomente b-1) zwischen 60 bis 300 g/mol liegt.

5. Verfahren nach einem der Ansprüche 1 bis 4, **dadurch gekennzeichnet, dass** die Komponente b) neben Komponente b-1) mindestens eine weitere Komponente b-2) enthält.

6. Verfahren nach Anspruch 5, **dadurch gekennzeichnet, dass** die Komponente b-2) ausgewählt ist aus Polyetheralkoholen und Polyesteralkoholen.

7. Verfahren nach einem der Ansprüche 5 oder 6, **dadurch gekennzeichnet, dass** die Komponente b) aus Komponenten b-1) und b-2) besteht.

8. Verfahren nach einem der Ansprüche 1 bis 7, **dadurch gekennzeichnet**, dassdas Treibmittel d) ausgewählt ist aus Wasser und Mischungen aus Wasser mit einem oder mehreren weiteren chemischen Treibmitteln.

9. Verfahren nach einem der Ansprüche 1 bis 8, **dadurch gekennzeichnet, dass** das Gewichtsverhältnis von Zellöffner e1) zu Stabilisator e2) im Bereich von 0,2 bis 10 liegt.

10. Verfahren nach einem der Ansprüche 1 bis 9, **dadurch gekennzeichnet, dass** der erhaltene offenzelligen Polyurethanhartschaum eine Dichte von 30 bis 100 g/l aufweist.

11. Verfahren nach einem der Ansprüche 1 bis 10, **dadurch gekennzeichnet, dass** die Reaktionsmischung frei geschäumt wird.

12. Offenzelliger Polyurethanhartschaum erhältlich durch ein Verfahren nach einem der Ansprüche 1 bis 11.

13. Offenzelliger Polyurethanhartschaum nach Anspruch 12 mit einer Dichte zwischen 30-100 g/l.

14. Verwendung eines offenzelligen Polyurethanhartschaums hergestellt nach einem Verfahren nach einem der Ansprüche 1 bis 11 als Kernmaterial von Vakuumisolationspanelen.

## Claims

1. A process for producing an open-cell rigid polyurethane foam by a slabstock foam process by reacting a reaction mixture comprising
a. one or more polyisocyanates;
b. one or more compounds comprising groups reactive towards isocyanate groups and having a functionality between 1.9 to 8;
c. one or more catalysts; and
d. blowing agents;
e. in the presence of a stabilizer e2) and a cell opener e1), where the stabilizer e2) is preferably a polyether-polydimethylsiloxane copolymer and the cell opener e1) is a mixture of macromolecular unsaturated hydrocarbons with an ester, and the weight ratio of cell opener e1) to stabilizer e2) is at least 0.2;
wherein
i. more than 1% by weight, based on the total weight of component b), of at least one compound b-1) is used as a chain extender and/or crosslinking agent, selected from the group of the alkanolamines, diols and/or triols having molecular weights of less than 400 g/mol and a functionality between 2 to 3 and
ii. the sole blowing agent is a chemical blowing agent or a mixture of chemical blowing agents, and
iii. the isocyanate index is in the range from 130 to 215.

2. The process according to claim 1, wherein a diol or triol is used in component b-1).

3. The process according to claim 1, wherein a diol is used in component b-1).

4. The process according to any of claims 1 to 3, wherein the molecular weight of component b-1) is between 60 to 300 g/mol.

5. The process according to any of claims 1 to 4, wherein component b) comprises at least one further component b-2) in addition to component b-1).

6. The process according to claim 5, wherein component b-2) is selected from polyether alcohols and polyester alcohols.

7. The process according to either of claims 5 and 6, wherein component b) consists of components b-1) and b-2) .

8. The process according to any of claims 1 to 7, wherein the blowing agent d) is selected from water and mixtures of water with one or more further chemical blowing agents.

9. The process according to any of claims 1 to 8, wherein the weight ratio of cell opener e1) to stabilizer e2) is in the range from 0.2 to 10.

10. The process according to any of claims 1 to 9, wherein the open-cell rigid polyurethane foam obtained has a density of 30 to 100 g/l.

11. The process according to any of claims 1 to 10, wherein the reaction mixture is free foamed.

12. An open-cell rigid polyurethane foam obtainable by a process according to any of claims 1 to 11.

13. The open-cell rigid polyurethane foam according to claim 12 having a density between 30-100 g/l.

14. The use of an open-cell rigid polyurethane foam produced by a process according to any of claims 1 to 11 as a core material of vacuum insulation panels.

## Revendications

1. Procédé pour la préparation d'une mousse dure de polyuréthane à alvéoles ouvertes par un procédé de mousse en bloc par transformation d'un mélange réactionnel comprenant
a. un ou plusieurs polyisocyanates ;
b. un ou plusieurs composés contenant des groupes réactifs envers des groupes isocyanate comportant une fonctionnalité comprise entre 1,9 et 8 ;
c. un ou plusieurs catalyseurs ; et
d. un agent gonflant ;
e. en présence d'un stabilisant e2) et d'un agent d'ouverture des alvéoles e1), le stabilisant e2) étant préférablement un copolymère de polyéther-polydiméthylsiloxane et l'agent d'ouverture des alvéoles e1) étant un mélange d'hydrocarbures insaturés macromoléculaires avec un ester, et le rapport en poids d'agent d'ouverture des alvéoles e1) sur le stabilisant e2) étant d'au moins 0,2 ;
**caractérisé en ce que**
i. plus de 1 % en poids, par rapport au poids total du composant b), d'au moins un composé b-1) est utilisé en tant qu'agent d'extension de chaînes et/ou agent de réticulation, choisi dans le groupe des alcanolamines, des diols et/ou des triols comportant des poids moléculaires inférieurs à 400 g/mole et une fonctionnalité comprise entre 2 et 3 et
ii. l'unique agent gonflant est un agent gonflant chimique ou un mélange d'agents gonflants chimiques, et
iii. l'indice d'isocyanate se situe dans la plage de 130 à 215.

2. Procédé selon la revendication 1, **caractérisé en ce qu'**un diol ou un triol est utilisé dans le composant b-1).

3. Procédé selon la revendication 1, **caractérisé en ce qu'**un diol est utilisé dans le composant b-1).

4. Procédé selon l'une quelconque des revendications 1 à 3, **caractérisé en ce que** le poids moléculaire du composant b-1) se situe entre 60 et 300 g/mole.

5. Procédé selon l'une quelconque des revendications 1 à 4, **caractérisé en ce que** le composant b) contient, outre le composant b-1), au moins un composant supplémentaire b-2).

6. Procédé selon la revendication 5, **caractérisé en ce que** le composant b-2) est choisi parmi des polyétheralcools et des polyesteralcools.

7. Procédé selon l'une quelconque des revendications 5 et 6, **caractérisé en ce que** le composant b) est constitué des composants b-1) et b-2).

8. Procédé selon l'une quelconque des revendications 1 à 7, **caractérisé en ce que** l'agent gonflant d) est choisi parmi l'eau et des mélanges d'eau avec un ou plusieurs autres agents gonflants chimiques.

9. Procédé selon l'une quelconque des revendications 1 à 8, **caractérisé en ce que** le rapport en poids d'agent d'ouverture des alvéoles e1) sur le stabilisant e2) se situe dans la plage de 0,2 à 10.

10. Procédé selon l'une quelconque des revendications 1 à 9, **caractérisé en ce que** la mousse dure de polyuréthane à alvéoles ouvertes obtenue présente une densité de 30 à 100 g/l.

11. Procédé selon l'une quelconque des revendications 1 à 10, **caractérisé en ce que** le mélange réactionnel est librement moussé.

12. Mousse dure de polyuréthane à alvéoles ouvertes obtenue par un procédé selon l'une quelconque des revendications 1 à 11.

13. Mousse dure de polyuréthane à alvéoles ouvertes selon la revendication 12 dotée d'une densité de 30 à 100 g/l.

14. Utilisation d'une mousse dure de polyuréthane à alvéoles ouvertes préparée par un procédé selon l'une quelconque des revendications 1 à 11 en tant que matériau noyau de panneaux d'isolation sous vide.
